# EUROPEAN PATENT APPLICATION

(11) **EP 3 627 452 A1**
(43) Date of publication of application: **25.03.2020**
(21) Application number: 18195934.7
(22) Date of filing: 21.09.2018
(51) Int. Cl.: G06T 17/00

(54) **METHOD, APPARATUS, COMPUTER-READABLE STORAGE MEDIA AND A COMPUTER PROGRAM FOR 3D RECONSTRUCTION**

(71) Applicant: Siemens Ltd. China, Beijing 100102 (CN)
(72) Inventor: SHENDRYK, Dmytro, Beijing, 102218 (CN)
(74) Representative: Isarpatent

(57) **Abstract**

The object of the present disclosure is to provide a solution for 3D reconstruction. A method for 3D reconstruction comprises following step: acquiring, from 2D images acquired via a camera of a target to be 3D reconstructed, information of an object in the target, which has been sensed by a configured sensor of the camera; reconstructing, according to the information, a 3D model of the target. With the information acquired, the boundary, structure and color of an object can be easily reconstructed in a shorter duration, and the result of reconstruction will be more precise.

## Description

The present invention relates to techniques of 3D reconstruction, and more particularly to a method, apparatus, computer-readable storage media and a computer program for 3D reconstruction.

In computer vision and computer graphics, 3D (three dimensional) reconstruction is a process of capturing shape and appearance of real objects. With 3D reconstruction, assets in a factory can be brought from a physical world to a digital world, which can provide interactions for the user, for example to remotely maintain a factory.

Usually, reconstruction of 3D models is very time consuming process. Thus the object of the present disclosure is to provide a method, apparatus, computer-readable storage media and a computer program for 3D reconstruction. With solutions provided in this disclosure, a 3D reconstruction progress can be shortened on a large scale.

The above objects are achieved by a method for 3D reconstruction according to claim 1, an apparatus for 3D reconstruction according to claim 6 or 11, a computer-readable storage media according to claim 12, a computer program according to claim 13 of the present technique.

Advantageous embodiments of the present technique are provided in dependent claims. Features of independent claims may be combined with features of claims dependent on the respective independent claim, and features of dependent claims can be combined together, unless otherwise indicated.

Usually, reconstruction of 3D models is very time consuming process. The present disclosure provides a solution of 3D reconstruction, in which, abundant information can be acquired while taking photos or a video of a target to be reconstructed by sensor (s) of a camera, then the boundary, structure and color of an object in the target can be easily reconstructed in a shorter duration, and the result of reconstruction will be more precise.

According to a first aspect of the present disclosure, a method for 3D reconstruction is presented, it comprises:
- acquiring, from 2D images acquired via a camera of a target to be 3D reconstructed, information of an object in the target, which has been sensed by a configured sensor of the camera;
- reconstructing, according to the information, a 3D model of the target.

According to a second aspect of the present disclosure, an apparatus for 3D reconstruction is presented, it comprises:
- an information acquisition module, configured to acquire, from 2D images acquired via a camera of a target to be 3D reconstructed, information of an object in the target, which has been sensed by a configured sensor of the camera;
- a 3D reconstruction module , configured to reconstruct, according to the information, a 3D model of the target.

According to a third aspect of the present disclosure, an apparatus of model training is presented, it comprises:
- a processor;
- a memory in electronic communication with the processor; and
- instructions stored in the memory, the instructions being executable by the processor to execute a method according to the first aspect of the present disclosure.

According to a fourth aspect of the present disclosure, a computer-readable storage media is presented, which has stored thereon: instructions executable by one or more processors of a computer system, wherein execution of the instructions causes the computer system to perform the method according to the first aspect of the present disclosure.

According to an fifth aspect of the present disclosure, a computer program is presented, it is being executed by one or more processors of a computer system and performs the method according to the first aspect of the present disclosure.

A solution is provided for 3D reconstruction. Abundant information can be acquired while taking photos or a video of a target to be reconstructed by sensor(s) of a camera, which shortens the reconstruction duration and make the result more precise.

In an embodiment of the present disclosure, the sensor of the camera includes an infrared sensor, structural information of the object can be sensed by the infrared sensor, and the 3D model of the target can be reconstructed according to the structural information.

In an embodiment of the present disclosure, the sensor includes a depth sensor, information of a boundary of the object can be sensed by the depth sensor and the 3D model of the target can be reconstructed according to the information of the boundary.

In an embodiment of the present disclosure, the sensor includes a RGB sensor, color information of the object can be sensed by the RGB sensor, and the 3D model of the target can be reconstructed according to the color information.

With the structural, boundary and color information of an object in a target, the target can be reconstructed more quickly and precisely.

In an embodiment of the present disclosure, semantic information of the object can be acquired from the information sensed by the sensor, wherein the semantic information comprises at least one of the following items:
- type of the object;
- size of the object;
- relationship of the object to another object in the target.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: Depicts a flowchart displaying an exemplary embodiment of a method for 3D reconstruction of the present disclosure
- FIG 2: Depicts a target to be 3D reconstructed and an object in the target of the present disclosure
- FIG 3: Depicts a camera to take photos or a video of a target to be 3D reconstructed and the camera's sensors of the present disclosure
- FIG 4: Depicts configuration of a camera's sensors of the present disclosure
- FIG 5: Depicts a block diagram displaying a first exemplary embodiment of an apparatus for 3D reconstruction of the present disclosure
- FIG 6: Depicts a block diagram displaying a second exemplary embodiment of an apparatus for 3D reconstruction of the present disclosure

### Reference numerals:

20, a camera
10, a sensor of the camera 20
101, a depth sensor of the camera 20
102, an infrared sensor of the camera 20
103, a RGB sensor of the camera 20
30, a 2D image acquired via the camera 20 of a target 40 to be
3D reconstructed
40, a target to be 3D reconstructed
50, information of an object 60 in the target 40
501, information of a boundary of the object 60
502, structural information of the object 60
503, color information of the object 60
60, an object in the target 40
80, an apparatus for 3D reconstruction
801, an information acquisition module
802, a 3D reconstruction module
803, a processor
804, a memory
S101, configuring a sensor 10 of a camera 20
S102, using the camera 20 to take photos or a video of the target 40 to be reconstructed
S103, acquiring the information 50 of the object 60
S104, reconstructing a 3D module according to the information 50
S105, acquiring the semantic information 70 of the object 60

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

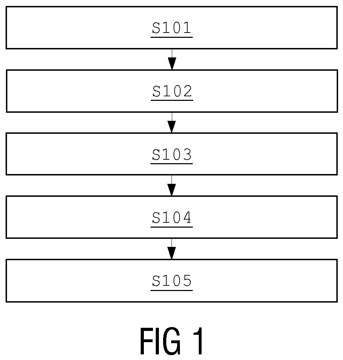

The present technique has been described hereinafter in details by referring to FIG 1 to 6.

In the embodiments presented, a target to be 3D reconstructed can be a factory, or part of a factory, such as a production line, or part of a production line.

An object can be a robot, a conveyer, a CNC machine, etc. Optionally, an object can be a specific version of a robot, that is, different versions will be considered as different objects.

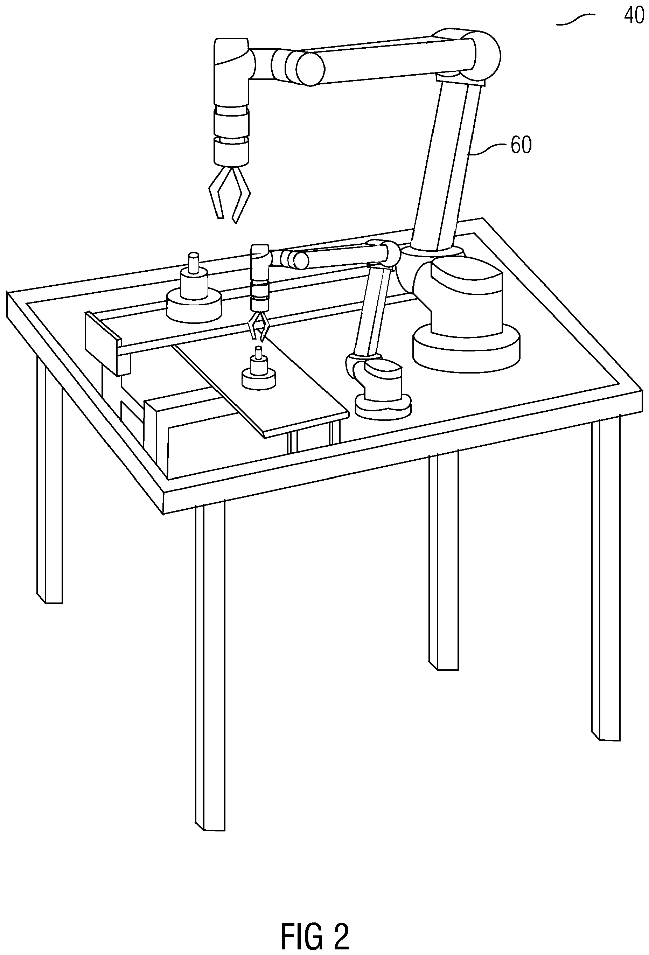

FIG 2 depicts a target to be 3D reconstructed and objects (robot arms, a conveyer and a console) in the target of the present disclosure.

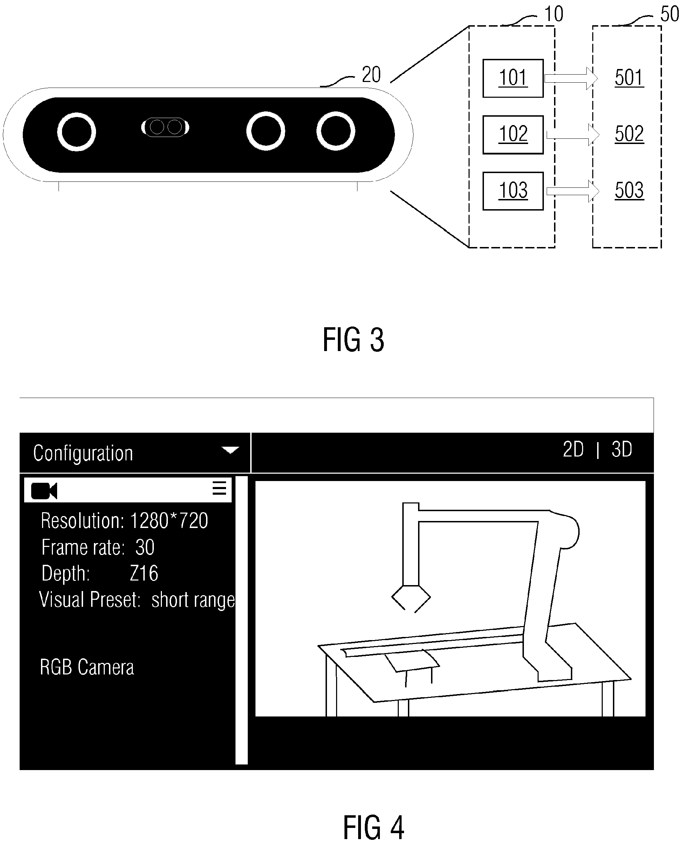

FIG 1 Depicts a flowchart displaying an exemplary embodiment of a method for 3D reconstruction of the present disclosure.The method can comprise following steps:
- **S101: configuring a sensor 10 of a camera 20.**
   In this step, sensor(s) 10 is/are configured for a specific use case, which makes the method presented in this disclosure be flexible.
   Referring to FIG 3, the camera 20's sensor 10 can include:
   - A depth sensor 101, which can sense information of a boundary 501 of an object 60;
   - An infrared sensor 102, which can sense structural information 502 of the object 60;
   - A RGB sensor 103, which can sense color information 503 of the object.
   FIG 4 gives an example on configuration of the camera 20's sensor 10 of the present disclosure. wherein, depth Z16 visual preset short range are configured parameters of the depth sensor 101; RGB camera is used to configure the RGB sensor 103.
- **S102: the camera 20 being used to take photos or a video of the target 40 to be reconstructed.**
   In this step, a user can use the configured camera 20 to take photos or a video of the target 40. Then the 2D images 30 of the target 40 can be acquired. Information 50 used for later 3D model of the target 40 is sensed by the sensor 10 in the process of taking photos or a video, and is recorded in the photos or the video. 2D (2 Dimensional) images, which compose a dataset, can be used to 3D reconstruct a target. In the embodiments presented, 2D images 30 to be used for 3D reconstruction of the target 40 can be acquired from the photos or the video taken via the camera 20 , wherein a video can be cut into the 2D images 30.
- **S103: acquiring the information 50 of the object 60.**
   In this step, information 50 of the object 60 can be acquired from the 2D images 30 acquired in the step 102.
   Wherein, information of a boundary 501, structural information 502 and color information 503 of the object 60 can be acquired in this step.
   To be noted that, there can be more than one object in the target 40, here just take the object 60 as an example. Information 50 of other objects in the target can also be acquired from the 2D images 30 in this step. To be more exact, information 50 of an object can be acquired from the 2D images 40 which contain the object.
   Optionally, the information 50 exists in the 2D images, for the camera 20 with sensor 10 is used to acquire the 2D images, the sensor 10 senses the information 50 during taking photos or a video. The information 50 needs not to be extracted from the 2D images. And in following step S104, when reconstructing a 3D model based on the 2D images 40, the information 50 can be automatically used during the recontruction.
- **S104: reconstructing a 3D model according to the information 50.**
   A 3D reconstruction is done in this step, with the abundant information 50 acquired in the step 103, the boundary, structure and color of an object 60 can be easily reconstructed in a shorter duration, and the result of reconstruction will be more precise.
- **S105(optional): acquiring the semantic information 70 of the object 60.**

In this step, at least one of the following items, as semantic information 70 of the object 60 is acquired:
- type of the object 60;
- size of the object 60;
- relationship of the object 60 to another object in the target 40.

Wherein, the type of the object 60 can be acquired from the color information 503, the information of a boundary 501 and the structural information 502 of the object 60.

The size of the object 60 can be acquired from the information of a boundary 501.

The relationship of the object 60 to another object in the target 40 can also be acquired from the information of a boundary 501.

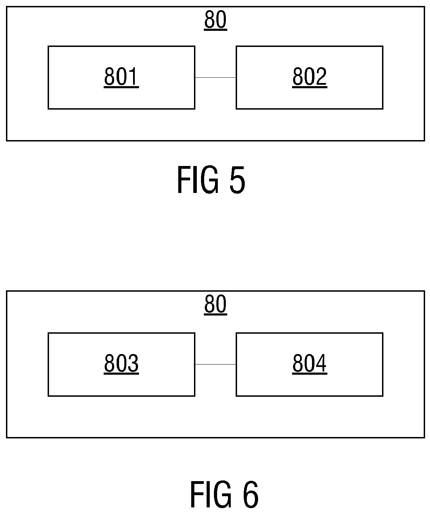

FIG 5 depicts a block diagram displaying a first exemplary embodiment of an apparatus 80 for 3D reconstruction of the present disclosure, which comprises:
- an information acquisition module 801, configured to acquire, from 2D images 30 acquired via a camera 20 of a target 40 to be 3D reconstructed, information 50 of an object 60 in the target 40 , which has been sensed by a configured sensor 10 of the camera 20;
- a 3D reconstruction module 802, configured to reconstruct, according to the information 50, a 3D model of the target 40.

Optionally, the sensor 10 includes a depth sensor 101,
- the information acquisition module 801, further configured to acquire information of a boundary 501 of the object 60, which has been sensed by the depth sensor 101;
- the 3D reconstruction module 802, further configured to reconstructing the 3D model according to the information of the boundary 501.

Optionally, the sensor 10 includes an infrared sensor 102,
- the information acquisition module 801, further configured to acquire structural information 502 of the object 60, which has been sensed by the infrared sensor 102;
- the 3D reconstruction module 802, further configured to reconstruct the 3D model according to the structural information 502.

Optionally, the sensor 10 includes a RGB sensor 103,
- the information acquisition module 801, further configured to acquire color information 503 of the object 60, which has been sensed by the RGB sensor 103;
- the 3D reconstruction module 802, further configured to reconstruct the 3D model according to the color information 503.

Optionally, the information acquisition module 801, is further configured to acquire semantic information of the object 60 from the information sensed by the sensor 10, wherein the semantic information comprises at least one of the following items:
- type of the object 60;
- size of the object 60;
- relationship of the object 60 to another object in the target 40.

Optionally, the modules 801,802 can be seen as programming modules, including instructions, stored in a memory 804 in electronic communication with a processor 803, when executed by the processor 803, can cause the apparatus 80 to implement the method for 3D reconstruction disclosed in this disclosure.

Or the modules 801 and 802 can be seen as hardware modules, which can be implemented by FPGA (Field-Programmable Gate Array), CPLD (Complex Programmable Logic Device), ASIC (Application Specific Integrated Circuits) etc., with the logic of 3D reconstruction loaded in these programmable logic devices.

Or the modules 801 and 802 can be seen as functional modules implemented by both software and hardware. For example, the information acquisition module 801 can be implemented by a programmable logic device, and the 3D reconstruction module 802 can be implemented by instructions' being executed by the processor 803.

A computer-readable storage media is also provided in the present disclosure, having stored thereon:
- instructions executable by one or more processors of a computer system, wherein execution of the instructions causes the computer system to perform the method presented in this disclosure.

A computer program, which is being executed by one or more processors of a computer system and performs the method presented in this disclosure.

The present disclosure provides a method, apparatus computer-readable storage media and a computer program for a target's 3D reconstruction. The target can be a factory, or part of a factory, an industrial device or part of a industrial device. The target can also be something not in industrial domain. With the technical solution provided in the present disclosure, a 3D reconstruction progress can be shortened on a large scale.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method for 3D reconstruction, comprising:
- acquiring, from 2D images(30) acquired via a camera(20) of a target(40) to be 3D reconstructed, information(50) of an object (60) in the target (40), which has been sensed by a configured sensor(10) of the camera(20);
- reconstructing, according to the information(50), a 3D model of the target(40).

2. The method according to claim 1, wherein the sensor(10) includes a depth sensor(101),
- the step of acquiring information(50) of an object(60) comprises: acquiring information of a boundary(501) of the object(60), which has been sensed by the depth sensor(101);
- the step of reconstructing a 3D model comprises: reconstructing the 3D model according to the information of the boundary(501).

3. The method according to claim 1 or 2, wherein the sensor(10) includes an infrared sensor(102),
- the step of acquiring information(50) of an object(60) comprises: acquiring structural information(502) of the object(60), which has been sensed by the infrared sensor(102);
- the step of reconstructing a 3D model comprises: reconstructing the 3D model according to the structural information(502).

4. The method according to any of claims 1 to 3, wherein the sensor(10) includes a RGB sensor(103),
- the step of acquiring information(50) of an object(60) comprises: acquiring color information (503) of the object(60), which has been sensed by the RGB sensor(103);
- the step of reconstructing a 3D model comprises: reconstructing the 3D model according to the color information(503).

5. The method according to any of claims 1 to 4, further comprises : acquiring semantic information of the object(60) from the information sensed by the sensor(10), wherein the semantic information comprises at least one of the following items:
- type of the object (60);
- size of the object (60);
- relationship of the object (60) to another object in the target(40).

6. An apparatus (80) for 3D reconstruction, comprising:
- an information acquisition module (801), configured to acquire, from 2D images (30) acquired via a camera (20) of a target (40) to be 3D reconstructed, information (50) of an object (60) in the target (40), which has been sensed by a configured sensor (10) of the camera (20);
- a 3D reconstruction module (802), configured to reconstruct, according to the information (50), a 3D model of the target (40) .

7. The apparatus (80) according to claim 6, wherein the sensor (10) includes a depth sensor (101),
- the information acquisition module (801), further configured to acquire information of a boundary (501) of the object (60), which has been sensed by the depth sensor (101);
- the 3D reconstruction module (802), further configured to reconstructing the 3D model according to the information of the boundary (501).

8. The apparatus (80) according to claim 6 or 7, wherein the sensor (10) includes an infrared sensor (102),
- the information acquisition module (801), further configured to acquire structural information (502) of the object (60), which has been sensed by the infrared sensor (102);
- the 3D reconstruction module (802), further configured to reconstruct the 3D model according to the structural information (502) .

9. The apparatus (80) according to any of claims 6 to 8, wherein the sensor(10) includes a RGB sensor(103),
- the information acquisition module (801), further configured to acquire color information (503) of the object (60), which has been sensed by the RGB sensor (103);
- the 3D reconstruction module(802), further configured to reconstruct the 3D model according to the color information (503) .

10. The apparatus(80) according to any of claims 6 to 9, the information acquisition module(801), further configured to acquire semantic information of the object(60) from the information sensed by the sensor(10), wherein the semantic information comprises at least one of the following items:
- type of the object(60);
- size of the object(60);
- relationship of the object(60) to another object in the target(40).

11. An apparatus(80) for 3D reconstruction, comprising:
- a processor (803);
- a memory (804) in electronic communication with the processor (803); and
- instructions stored in the memory (804), the instructions being executable by the processor(803) to execute a method according to any claim of the claims 1 to 5.

12. A computer-readable storage media having stored thereon:
- instructions executable by one or more processors of a computer system, wherein execution of the instructions causes the computer system to perform the method according to any one of the claims 1 to 5.

13. A computer program, which is being executed by one or more processors of a computer system and performs the method according to one of the claims 1 to 5.
